# EUROPÄISCHE PATENTANMELDUNG

(11) **EP 4 541 195 A1**
(43) Veröffentlichungstag der Anmeldung: **23.04.2025**
(21) Anmeldenummer: 23204296.0
(22) Anmeldetag: 18.10.2023
(51) Int. Cl.: A21C 9/08, A21B 3/07, A21B 5/08

(54) **VORRICHTUNG UND VERFAHREN ZUM BESCHICKEN EINER SIEDEBACKMASCHINE UND SIEDEBACKSYSTEM**

(71) Anmelder: InnovaBack GmbH, 29525 Uelzen (DE)
(72) Erfinder: SCHRÖDER, Peter, 29525 Uelzen (DE)
(74) Vertreter: Seemann & Partner Patentanwälte mbB

(57) **Zusammenfassung**

Die Erfindung betrifft eine Vorrichtung (10) und ein Verfahren zum Beschicken einer Siedebackmaschine, sowie ein Siedebacksystem.

Die Vorrichtung (10) umfasst ein Rahmengestell (12) mit einer ersten wenigstens teilweise offenen Seitenfläche (16), an der eine Arretiervorrichtung (18) für einen Stikkenwagen (60) angeordnet ist, und einer zweiten wenigstens teilweise offenen Seitenfläche (20), sowie eine Lochblech-Transporteinrichtung (22), die eine horizontal und vertikal bewegliche Greifeinrichtung (24) mit einer Steuerung (26) umfasst. Die Greifeinrichtung (24) ist ausgebildet, auf eine vorbestimmte Höhe eines Lochblechs (70) in einer der Aufnahmen eines Stikkenwagens (60) verfahren zu werden, ein in der Aufnahme enthaltenes Lochblech (70) zu ergreifen und durch die erste Seitenfläche (16) in das Rahmengestell (12) zu ziehen, innerhalb des Rahmengestells (12) oder Gehäuses auf eine Abgabehöhe zu verfahren und durch die zweite Seitenfläche (20) in eine externe Abgabeposition für eine Siedebackmaschine zu verschieben.

## Beschreibung

Die vorliegende Erfindung betrifft eine Vorrichtung und ein Verfahren zum Beschicken einer Siedebackmaschine sowie ein Siedebacksystem.

Siedegebäck, auch Fettgebäck genannt, sind Backwaren, die in hei-ßem Fett schwimmend ausgetragen werden. Beispiele für Siedegebäck sind Berliner, Krapfen, Donuts, Spritzkuchen oder Spritzgebäck. Das Zubereiten von Siedegebäck erfolgt in Bäckereien und Großbäckereien mithilfe von Siedebackmaschinen, also mehrere Meter langen Fritteusen, die in der Lage sind, bei einer Backzeit von mehreren Minuten mehrere Hundert bis mehrere Tausend Berliner oder andere Siedegebäckstücke pro Stunde herzustellen. Siedebackmaschinen werden auch als Fettback-Automaten oder Siedebackautomaten bezeichnet.

Der Vorgang des maschinellen Fettbackens bzw. Siedebackens hat mehrere Schritte. Rohlinge, auch Teiglinge genannt, werden ausgeformt und in mehreren Reihen auf ein lebensmittelechtes Tuch gelegt, das auf einem Backblech bzw. Lochblech liegt. Diese Lochbleche sind üblicherweise genormt und erlauben Anordnungen von mehreren Reihen mit jeweils mehreren Rohlingen, je nach Norm. Die mit Rohlingen voll belegten Lochbleche werden in die Aufnahmen eines Stikkenwagens, auch Stikken genannt, geschoben. Dabei handelt es sich um ein fahrbares Transportgestell mit üblicherweise genormten Maßen, das eine Mehrzahl, beispielsweise 17, 18 oder 20, in manchen Fällen bis zur 60, von Lochblechen übereinander in seitlichen Schienen aufnehmen kann. Die Aufnahmen für die Lochbleche sind in gleichbleibenden Abständen übereinander angeordnet. Die Schienen haben häufig an ihren Enden einen erhöhten Endabschnitt, der verhindert, dass ein Lochblech verrutschen kann. Der mit Lochblechen mit Rohlingen bestückte Stikkenwagen wird anschließend zur Aufnahmeseite der Siedebackmaschine gefahren.

Das Beschicken der Siedebackmaschine erfolgt per Hand. Einige Siedebackmaschinen wie beispielsweise die Siedebackanlage FG 6-16 der InnovaBack GmbH verfügen an dieser Seite über einen Tisch, auf den die Lochbleche nacheinander händisch aufgelegt werden. Die Siedebackmaschine weist einen Mechanismus auf, der das Tuch, auf dem die Rohlinge in mehreren regelmäßigen Reihen angeordnet sind, ergreift und zusammen mit den Rohlingen in Richtung auf ein Laufband in Form eines Stabgeflechtband zu zieht. Dazu hat das Tuch an seiner vorderen Kante eine durchgehende Lasche, durch die ein Metallstab hindurchgeführt ist, der an beiden Seiten das Tuch überragt. Die Enden des Metallstabs werden an beiden Seiten des Tisches in Aufnahmen eines Kettenantriebs eingelegt, der das Tuch vom Lochblech abzieht.

Die einzelnen Reihen der Rohlinge werden über ein geneigtes Stabgeflechtband zum Fettbecken gefördert, in das sie hineinfallen. Dazu wird das Tuch getaktet jeweils um eine Reihe von Rohlingen vorbewegt, was durch eine Lichtschranke am Übergang zum Stabgeflechtband erkannt wird. Die getaktete Vorbewegung des Tuchs wird so eingestellt, das die vorderste Reihe von Rohlingen sicher auf das Stabgeflechtband gelangt und von diesem mitgenommen wird. Das umlaufende Stabgeflechtband selbst kann permanent laufen.

Das Lochblech selbst kann entfernt werden, sobald der Mechanismus das Tuch mit den Rohlingen sicher erfasst hat. Diese Zeit kann genutzt werden, um das entleerte Lochblech wieder in den Stikkenwagen zu bringen und ein volles Lochblech zu entnehmen und auf den Tisch der Siedebackmaschine zu legen. Abhängig von der Anzahl der Reihen von Rohlingen und der Taktung beträgt die Dauer, bis das nächste Lochblech aufgelegt werden muss, zwischen 40 Sekunden und zwei Minuten, wobei größere Anlagen im Allgemeinen einen grö-ßeren Durchsatz haben als kleinere Anlagen. Das Tuch wird durch einen Spalt vor dem Stabgeflechtband, nach unten abgezogen und kann entnommen, gegebenenfalls gereinigt, und wiederverwendet werden.

Im Fettbecken schwimmen die Rohlinge auf dem heißen Fett auf. Die Förderung der schwimmenden Rohlinge erfolgt über einen umlaufenden Kettenantrieb mit Querstreben, die die aufeinander folgenden Reihen von Rohlingen voneinander trennen und diese in getakteten Vortriebsbewegungen mitnehmen. Die Breite der Fettbecken kann beispielsweise 6, 8 oder 10 nebeneinander schwimmenden Berliner- oder Spritzgebäck-Rohlingen entsprechen. Die Rohlinge verbleiben für mehrere Minuten im Fettbecken, im Falle von Berlinern beispielsweise 6 Minuten. Die Fettbecken haben, je nach Maschine und Kapazität, Längen von beispielsweise 16, 20, 25 oder 35 Reihen von Rohlingen, die gleichzeitig siedegebacken werden.

Im Laufe des Siedebackvorgangs kann es sein, dass die Rohlinge gewendet werden, was zum Beispiel im Falle von Berlinern typischerweise zwei- bis dreimal mithilfe von Wendevorrichtungen, die sich über die Breite der Rohlingreihen erstrecken, geschieht. Das Wenden erfolgt in einem Teil der Vortriebs-Taktung, wo die Reihen von Rohlingen stationär sind.

Am Ende des Siedebackvorgangs gelangen die fertig gebackenen Backwaren in einen Behälter, in dem sie abtransportiert werden können, oder sie werden von einem Mitarbeiter oder automatisch endpräpariert. Im Falle von Berlinern können die siedegebackenen Stücke beispielsweise mittels einer Nadel mit Marmelade aus einem Marmeladenbehälter o.ä. befüllt werden und anschließend in einem Zuckerrondell in einer Lasieranlage mit einer äußeren Zucker- oder Lasurschicht versehen werden.

Nachdem sämtliche Lochbleche des Stikkenwagens verarbeitet worden sind, wird der Stikkenwagen von der Siedebackmaschine entfernt und ein vorbereiteter befüllter weiterer Stikkenwagen aus einem Gärraum herantransportiert, in dem das Hefegebäck gegärt hat, um den Siedebackvorgang kontinuierlich aufrechtzuerhalten. Die inzwischen geleerten Lochbleche können wieder mit einem Tuch und Rohlingen bestückt werden.

Dadurch, dass die Siedebackmaschine händisch beschickt wird, ist zu jedem Zeitpunkt ein Mitarbeiter der Bäckerei damit beschäftigt, die Lochbleche aus dem Stikkenwagen zu entnehmen und damit die Siedebackmaschine zu beschicken. Die Handhabung ist fehleranfällig. Die Lochbleche können beim Entnehmen vom Stikkenwagen verkanten oder kippen, was dazu führt, dass die Rohlinge auf dem Tuch oder mit dem Tuch verrutschen und gegebenenfalls geradegerückt werden müssen, um fehlerfrei von der Siedebackmaschine aufgenommen zu werden. Hierdurch verzögert sich der Produktionsprozess. In extremen Fällen können Rohlinge vom Lochblech herunterfallen und müssen entsorgt werden, und der Boden muss gereinigt werden. Eines der häufigsten Probleme ist, dass Mitarbeiter anderweitig beschäftigt sind und keine Bleche nachlegen. Dann sind einige Reihen im Fettbecken leer. Dies führt sowohl zu Produktionseinbu-ßen als auch zu unnötiger langer Zeit, in der das Fett erhitzt werden muss, was angesichts dessen, dass die Siedebackanlagen in vielen Bäckereien der zweitgrößte Energieverbraucher sind, ein signifikanter Faktor ist.

Es ist Aufgabe der vorliegenden Erfindung, die vorliegenden Nachteile zu vermeiden und sicherzustellen, dass eine Siedebackmaschine schnell und fehlerfrei mit Rohlingen beschickt wird.

Diese Aufgabe wird durch eine Vorrichtung zum Beschicken einer Siedebackmaschine gelöst, umfassend ein Rahmengestell oder Gehäuse mit einer ersten wenigstens teilweise offenen Seitenfläche, an der eine Arretiervorrichtung für einen Stikkenwagen angeordnet ist, und einer zweiten wenigstens teilweise offenen Seitenfläche, ferner umfassend eine im Rahmengestell oder Gehäuse angeordnete Lochblech-Transporteinrichtung, die eine horizontal und vertikal bewegliche Greifeinrichtung mit einer Steuerung umfasst, wobei die Greifeinrichtung ausgebildet ist, im Rahmengestell oder Gehäuse auf eine vorbestimmte Höhe eines Lochblechs in einer der Lochblechaufnahmen eines Stikkenwagens verfahren zu werden, ein in der Lochblechaufnahme enthaltenes Lochblech zu ergreifen und durch die erste Seitenfläche in das Rahmengestell oder Gehäuse zu ziehen, innerhalb des Rahmengestells oder Gehäuses auf eine Abgabehöhe zu verfahren und durch die zweite Seitenfläche in eine externe Abgabeposition für eine Siedebackmaschine zu verschieben.

Diese kostengünstige automatisierte Beschickung beruht auf der Kenntnis der Bemaßung der standardisierten Stikkenwagen und Lochbleche und vermeidet die Fehlerquellen bei manueller Beschickung. Die Steuerung kann entweder auf verschiedene standardisierte Maße von Stikkenwagen und Lochblechen eingelernt oder programmiert werden oder auf ein vordefiniertes Standardmaß fest eingestellt sein.

Je nach Konfiguration der Vorrichtung können die erste und die zweite Seitenfläche unter einem 90°-Winkel zueinander stehen oder einander gegenüberstehen.

In einer Weiterbildung ist die Lochblech-Transporteinrichtung ausgebildet, das Lochblech aus der externen Abgabeposition in das Rahmengestell oder Gehäuse zurück zu ziehen, auf die Höhe einer Lochblechaufnahme des Stikkenwagens zu bringen und in die Lochblechaufnahme einzuschieben und loszulassen. Damit kann der Vorgang für alle Lochbleche des Stikkenwagens in gleicher Weise wiederholt werden, bis alle Lochbleche hin- und her transferiert sind.

Zur Bestimmung des Zeitpunkts, wann die Entnahme von Lochblechen aus einem Stikkenwagen begonnen wird bzw. wann ein Lochblech von einer Siedebackmaschine wieder zurückgeholt wird, sind mehrere Alternativen vorgesehen, die auch parallel zueinander implementiert sein können.

In einer ersten Alternative ist die Steuerung mit einem Bedienelement verbunden oder umfasst ein Bedienelement, mit dem ein Entnahmevorgang aus einem Stikkenwagen und/oder ein Rückholvorgang von der Siedebackmaschine manuell gestartet werden kann. Ein solches Bedienelement kann ein oder mehrere Knöpfe, Tasten oder Schalter aufweisen oder eine bedienbare Anzeigeeinheit wie einen Touchscreen.

In einer zweiten Alternative ist die Steuerung ausgebildet, den Start des Entnahmevorgangs und/oder das Verweilen des Lochblechs in der Aufnahme der Siedebackmaschine zeitlich gesteuert mit festgelegten zeitlichen Intervallen auszuführen. Der Start des Abarbeitens der Lochbleche eines Stikkenwagens kann manuell erfolgen oder automatisch nach dem Arretieren eines Stikkenwagens mit der Arretiervorrichtung, wobei die Arretiervorrichtung einen Sensor umfasst, der mit der Steuerung signalverbunden ist und ein Signal abgibt, wenn eine Arretierung eines Stikkenwagens erfolgt ist.

Ferner kann in einer Ausführungsform vorgesehen sein, dass die Steuerung eine Schnittstelle zu einer Siedebackmaschine umfasst, die mit einer Steuereinrichtung der Siedebackmaschine verbunden oder verbindbar ist oder die die Steuerung der Lochblech-Transporteinrichtung ausführt, wobei die Steuerung ausgebildet ist, auf ein Signal der Siedebackmaschine hin, welche die Vollendung des Abziehens des Tuchs mit den Rohlingen vom Lochblech oder das Ergreifen des Tuchs mit den Rohlingen anzeigt, das Zurückholen des Lochblechs zu starten. Im letztgenannten Fall kann Zeit eingespart werden, da es für das Abziehen des Tuchs mit den Rohlingen nicht erforderlich ist, dass das Lochblech selbst in der Aufnahme der Siedebackmaschine verbleibt, sofern die Aufnahme eine entsprechende Unterlage für das Tuch und die Rohlinge umfasst. In diesem Fall kann das automatische Wegbringen des leeren Lochblechs und das Heranholen eines neuen, voll belegten Lochblechs in der Zeit erfolgen, die die Siedebackmaschine benötigt, um das Tuch mit den Rohlingen vom vorangegangenen Lochblech einzuziehen, so dass der Massenstrom der Rohlinge im Wesentlichen nicht unterbrochen wird.

Eine Alternative oder Ergänzung hierzu ist, eine Kamera von oben auf einen Bereich zu richten, in dem die Übergabe der Lochbleche von der Vorrichtung zur Siedebackmaschine stattfindet. Die Kamera kann beispielsweise an der Vorrichtung angeordnet und/oder befestigt sein. Die von der Kamera aufgenommenen Bilder werden dahingehend ausgewertet, dass erkannt wird, ob das Tuch weit genug vom Lochblech abgezogen ist, um dann den Rückholvorgang für das Lochblech zu starten.

Zum Verfahren der Greifeinrichtung kann die Lochblech-Transporteinrichtung über eine XYZ-Linearführung, insbesondere mit Linearmotoren, verfügen, die von einer Motorsteuerung angesteuert werden, die von der Steuerung zum Anfahren der gewünschten Positionen instruiert wird.

Die Greifeinrichtung verfügt in Ausführungsformen über ein oder mehrere Greifelemente, das oder die ausgebildet ist oder sind, standardisierte Lochbleche zu ergreifen und zu halten. Das Greifelement oder die Greifelemente können in verschiedenen Versionen beispielsweise Klemmen, Finger oder verkippbare Stützelemente umfassen, wobei die Stützelemente so ausgeführt sind, dass sie eine Aufnahme für ein Lochblech aufweisen, die in einer ersten Rotationsposition über den Rand eines Lochblechs gefahren werden kann und in einer zweiten Rotationsposition das Lochblech hält und stützt. Das oder die Greifelemente können in Ausführungsformen seitlich beweglich einstellbar sein, um durch eine geeignete Einstellung zu vermeiden, Rohlinge auf dem Lochblech zu berühren.

Die Lochblech-Transporteinrichtung kann auch über Stützelemente, insbesondere Stützschienen, beispielsweise aus Plastik oder Teflon verfügen, auf welchen das Lochblech während des Verfahrens im Rahmengestell bzw. Gehäuse der Vorrichtung abgelegt ist oder wird.

In einer Weiterbildung ist die Steuerung ausgebildet, die Greifeinrichtung nach dem Erfassen eines Lochblechs in einer Aufnahme eines Stikkenwagens etwas anzuheben, bevor das Lochblech aus der Aufnahme herausgezogen wird. Hierdurch wird ein Widerhaken überwunden, der gegebenenfalls in den Aufnahmeschienen der Aufnahme des Stikkenwagens vorhanden ist, um zu verhindern, dass ein Lochblech aus der Aufnahme ungewünscht herausrutschen kann.

Die der Erfindung zugrundeliegende Aufgabe wird auch durch ein Verfahren zum Beschicken einer Siedebackmaschine gelöst, bei dem ein Stikkenwagen mit Rohlingen auf Tüchern belegten Lochblechen in den Aufnahmen des Stikkenwagens an eine erste Seitenfläche einer zuvor beschriebenen erfindungsgemäßen Vorrichtung herangefahren wird, an der ersten Seitenfläche arretiert wird und eine Greifeinrichtung an einer Lochblech-Transporteinrichtung der Vorrichtung auf die Höhe eines Lochblechs in einer der Aufnahmen des Stikkenwagens gefahren wird, ein Greifelement der Greifeinrichtung zu dem Lochblech gefahren wird, das Lochblech ergreift und auf die Lochblech-Transporteinrichtung zieht, wobei die Lochblech-Transporteinrichtung das Lochblech anschließend auf eine Höhe einer Abgabeposition zu einer Siedebackmaschine verfährt und durch eine zweite Seitenfläche der Vorrichtung in eine Abgabeposition der Siedebackmaschine herausfährt. Damit sind die gleichen Vorteile, Merkmale und Eigenschaften verwirklicht wie mit der erfindungsgemäßen Vorrichtung, sodass für die Erläuterung auf die in Verbindung mit der Vorrichtung gemachten Erläuterungen zurückverwiesen wird.

In einer Weiterbildung des Verfahrens ist vorgesehen, dass die Greifeinrichtung das Lochblech wieder aus der Siedebackmaschine herauszieht und auf die Höhe der oder einer Aufnahme des Stikkenwagens verfährt und das Lochblech in die Aufnahme des Stikkenwagens einschiebt.

Dieser Vorgang wird vorzugsweise wiederholt, bis sämtliche Lochbleche im Stikkenwagen verarbeitet worden sind.

Die der Erfindung zugrunde liegende Aufgabe wird auch durch ein Siedebacksystem gelöst, welches eine Siedebackmaschine und eine zuvor beschriebenen erfindungsgemäßen Vorrichtung umfasst, die mit ihrer zweiten Seitenfläche an der Aufnahmeseite der Siedebackmaschine angeordnet ist, um Lochbleche mit Rohlingen von Aufnahmen von an der ersten Seitenfläche arretierten Stikkenwagen in eine Abgabeposition an der Siedebackmaschine abzulegen und die geleerten Lochbleche wieder von der Abgabeposition der Siedebackmaschine abzuziehen und in die Aufnahmen der Stikkenwagen zurückzutransportieren.

Das Siedebacksystem verwirklicht somit die gleichen Vorteile, Merkmale und Eigenschaften wie das erfindungsgemäße Verfahren und die erfindungsgemäße Vorrichtung.

Die Vorrichtung kann separat von der Siedebackmaschine sein oder ein Teil der Siedebackmaschine. Im ersteren Fall können bestehende Siedebackmaschinen mit einer entsprechenden Vorrichtung nachgerüstet werden. Die Steuerung der Vorrichtung kann eine eigene Steuerung sein, die entweder keine Verbindung mit einer Steuerung der Siedebackmaschine hat oder über eine Schnittstelle mit einer Steuerung der Siedebackmaschine verbunden ist, um Signale auszutauschen, beispielsweise ein Signal der Siedebackmaschine, dass ein Tuch ergriffen worden ist oder vollständig abgezogen worden ist, damit die Vorrichtung das entsprechende Lochblech aus der Abgabeposition der Siedebackmaschine wieder zurückziehen kann und das nächste Lochblech aus dem Stikkenwagen entnehmen kann. Ferner kann die Steuerung der Lochblech-Transporteinrichtung der Vorrichtung auch in einer Steuerung der Siedebackmaschine implementiert sein, sodass die Siedebackmaschine und die Vorrichtung eine gemeinsame Steuerung bzw. Steuereinheit aufweisen.

Zur sicheren Abgabe des Tuchs eines Lochblechs auf den Tisch der Siedebackmaschine kann in Ausführungsformen auf jeder Seite ein Führungstrichter vorgesehen sein, in die die Enden der Stangen eingeführt werden und die sicherstellen, dass Mitnehmer an einem umlaufenden Kettenantrieb des Tisches die Enden der Stange erfassen und das Tuch mit den Rohlingen mitnehmen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine perspektivische Ansicht einer erfindungsgemäßen Vorrichtung,
- Fig. 2: eine perspektivische Ansicht einer erfindungsgemäßen Vorrichtung mit angedocktem Stikkenwagen,
- Fig. 3: drei Planansichten der erfindungsgemäßen Vorrichtung mit angedocktem Stikkenwagen,
- Fig. 4: eine perspektivische Ansicht eines Tisches einer Siedebackmaschine und
- Fig. 5: eine Detailansicht aus der Ansicht des Tisches gemäß Fig. 4.

In den Zeichnungen sind jeweils gleiche oder gleichartige Elemente und/oder Teile mit denselben Bezugsziffern versehen, so dass von einer erneuten Vorstellung jeweils abgesehen wird.

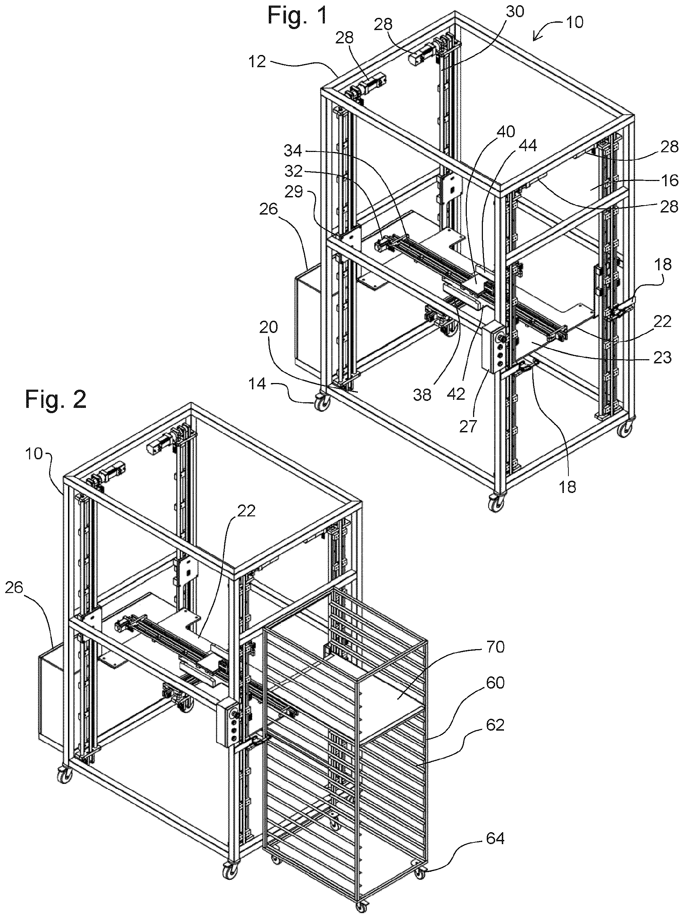

Fig. 1 zeigt eine perspektivische Ansicht einer erfindungsgemäßen Vorrichtung 10 zum Beschicken einer Siedebackmaschine (ohne Darstellung). Die Vorrichtung 10 umfasst ein Rahmengestell 12, in dem bis auf eine Steuerung 26 die Komponenten der Vorrichtung 10 angeordnet sind. Das Rahmengestell 12 hat einen rechteckigen Grundriss und steht auf Rollen 14, kann aber auch fest beispielsweise auf einem Hallenboden installiert sein. Die Seitenflächen des Rahmengestells 12 sind, bis auf Querstreben, offen. An einer ersten Seitenfläche 16 ist ein Bedienelement 27, in diesem Fall ein Schaltkasten mit Druckknöpfen, angeordnet. Neben einem Not-Aus-Knopf kann der Schaltkasten Knöpfe oder einen Touchscreen aufweisen, mit dem der Vorgang des Entleerens des Stikkenwagens 60 gestartet oder gestoppt werden kann. Ebenso kann gegebenenfalls in Ausführungsformen über den Schaltkasten eingegeben werden, welche der Aufnahmen 62 des Stikkenwagens belegt sind, falls dieser nicht ohnehin voll belegt ist.

An dieser ersten Seite 16 werden in der Produktion Stikkenwagen 60 angeordnet, wie dies in Fig. 2 gezeigt ist, die sich von Fig. 1 nur in der Anwesenheit des Stikkenwagens 60 unterscheidet. Stikkenwagen 60 sind genormt und umfassen eine Mehrzahl von Aufnahmen 62 in Form von Schienenpaaren, in die Lochbleche 70 eingeschoben werden, die zuvor mit einem lebensmittelechten Tuch und Rohlingen für Siedegebäckstücke, beispielsweise Berliner, belegt worden sind. Der Stikkenwagen 60 ist auf Rollen 64 gelagert, um ihn mit den Rohlingen vom Ort der Produktion der Rohlinge zur Siedebackmaschine zu rollen und nach vollendetem Durchlauf durch alle Lochbleche 70 wieder zu entfernen und die Lochbleche 70 neu zu belegen.

Zum Arretieren der Stikkenwagen 60 hat die Vorrichtung 10 am Rahmengestell 12 an der ersten Seitenfläche 16 zwei Arretierungsvorrichtungen 18, die, aktiviert, das Rahmengestell des Stikkenwagens 60 einklemmen und den Stikkenwagen 60 dadurch in eine bekannte, fixe Position relativ zum Rahmengestell 12 der Vorrichtung 10 fixiert.

Im Inneren des Rahmengestells 12 weist die Vorrichtung 10 eine Lochblech-Transporteinrichtung 22 auf. Diese umfasst eine in der Höhe verstellbare Transportfläche 23 auf, die als Basis für einen XY-Linearantrieb dient. Die Transportfläche 23 weist zu diesem Zweck an den vier Ecken des Grundrisses Befestigungen 29 mit Innengewinde auf, durch die Vertikalschraubstangen 30 geführt sind, die von Elektromotoren 28 betrieben werden. Jede der vier Ecken des rechteckigen Grundrisses weist einen Elektromotor 28, eine Vertikalschraubstange 30 und eine Befestigung 29 der Transportfläche 23 auf. Die Elektromotoren 28 für die Vertikalbewegung werden synchron angesteuert. Alternativ kann vorgesehen sein, alle vier vertikalen Linearantreibe über Wellen mit einem Motor zu betreiben, um einen gleichmäßigen Verfahransatz zu erzielen.

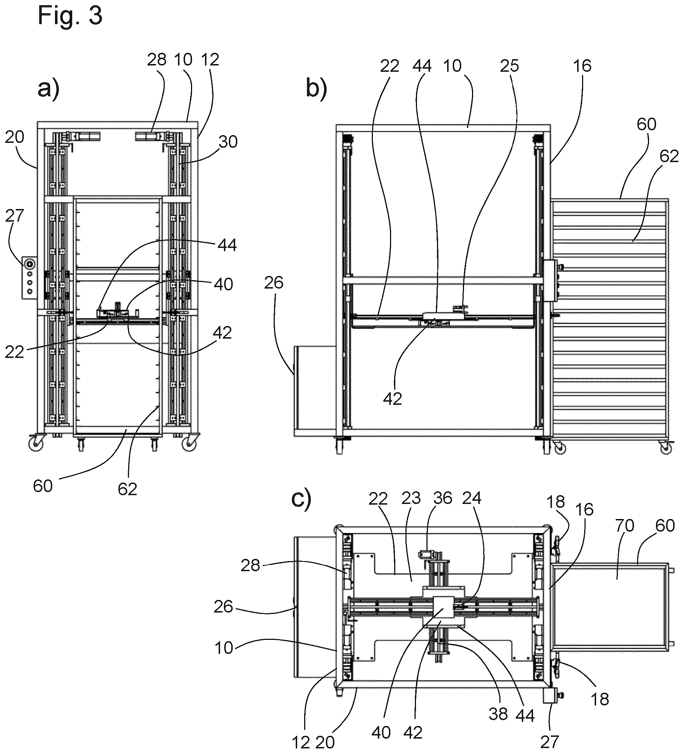

Auf der Transportfläche 23 gelagert umfasst der XY-Linearantrieb zuunterst einen horizontalen Zahnriemen-Linearantrieb 38 auf, der von einem Elektromotor 36 angetrieben wird und auf dem ein unterer Schlitten 42 läuft. Der untere horizontale Zahnriemen-Linearantrieb 38 und der Elektromotor 36 sind in Fig. 3 c) dargestellt. Der untere horizontale Zahnriemen-Linearantrieb 38 verläuft in dem Ausführungsbeispiel in einer horizontalen Ebene parallel zur ersten Seitenfläche 16 der Vorrichtung 10.

Auf dem unteren Schlitten 44 ist ein in einem Winkel von 90° zum unteren horizontalen Zahnriemen-Linearantrieb 38 angeordneter oberer horizontaler Zahnriemen-Linearantrieb 34 angeordnet, der von einem Elektromotor 32 angetrieben wird. Der obere horizontale Zahnriemen-Linearantrieb 34 verläuft senkrecht zur ersten Seitenfläche 16 der Vorrichtung 10. Auf dem oberen horizontalen Zahnriemen-Linearantrieb 34 läuft ein oberer Schlitten 40, der eine Greifeinrichtung 24 mit einem Greifelement 25 trägt. Das Greifelement ist in Fig. 3 b) besser erkennbar, in Fig. 1 und Fig. 2 ist es perspektivisch von einer Querstrebe des Rahmengestells 12 verdeckt.

Die beiden horizontalen Zahnriemen-Linearantriebe 34, 38 können alternativ auch als Horizontalschraubstangen-Antriebe ausgebildet sein.

In Fig. 3 a), 3 b) und 3 c) ist die Vorrichtung 10 zusammen mit einem angedockten Stikkenwagen 60 in planen Draufsichten von der ersten Seitenfläche 16 her (Fig. 3 a), von der zweiten Seitenfläche 20 her (Fig. 3 b) und von oben (Fig. 3c) dargestellt.

Im Betrieb wird ein mit belegten Lochblechen 70 befüllter Stikkenwagen 60 mit seiner Frontseite zur ersten Seitenfläche 16 der Vorrichtung 10 gerollt und dort ausgerichtet und mittels der Arretiervorrichtung 18 arretiert. Damit ist die Position bekannt, und die Lochbleche 60 können nacheinander von der Lochblech-Transporteinrichtung 22 im Inneren der Vorrichtung 10 aus den Aufnahmen 62 des Stikkenwagens entnommen werden. Eine Sensorik kann vorgesehen sein, ist aber nicht notwendig, da die Position und die Bemaßungen des Stickenwagens 60 bekannt sind und die Steuerung 26 der Vorrichtung 10 die Lochblech-Transporteinrichtung 22 automatisch an die korrekten Positionen fahren lässt.

Sobald die Lochblech-Transporteinrichtung 22 auf die Höhe des nächsten Lochblechs 70 in einer der Aufnahmen 62 des Stikkenwagens 60 gefahren worden ist, wird der XY-Linearantrieb mit den Schlitten 40, 42 so angesteuert, dass das Greifelement 25 der Greifeinrichtung 24 auf dem oberen Schlitten 40 auf das Lochblech 70 zu gefahren wird. Sobald es an der Endposition am Lochblech 70 angekommen ist, erfasst das Greifelement 25 die Kante des Lochblechs 70 und klemmt sie ein. In Fällen, in denen die Schienen der Aufnahmen 62 des Stikkenwagens 60 über erhöhte Endstopper verfügen, hebt der Vertikalantrieb der Lochblech-Transporteinrichtung 22 oder, alternativ, eine in die Greifeinrichtung 24 eingebaute Mimik, das Lochblech 70 etwas an, beispielsweise um 5 mm, um den Endstopper zu überwinden, und der obere Schlitten 40 wird wieder in das Innere der Vorrichtung 10 zurückgeholt, wobei das Lochblech 70 mitgezogen wird. Nach ungefähr der Hälfte des Weges in das Innere des Rahmengestells 12 hinein erreicht das Lochblech 70 zwei Gleitschienen 44 aus Teflon oder Kunststoff, die am unteren Schlitten 42 ausgebildet sind.

Sobald der obere Schlitten 40 die Endposition erreicht hat, in der das Lochblech 70 vollständig in der Vorrichtung 10 aufgenommen ist, wird die Lochblech-Transporteinrichtung 22 vertikal in eine Höhe verfahren, in der das Lochblech 70 mit den Rohlingen durch die zweite Seitenfläche 20 einer (nicht dargestellten) Siedebackmaschine übergeben werden kann.

Im Ausführungsbeispiel der Figuren 1 bis 3 grenzt die zweite Seitenfläche 20 direkt an die erste Seitenfläche 16 an. Um das Lochblech 70 durch die zweite Seitenfläche 20 auszubringen, wird der untere Teil des XY-Linearantriebs mit dem von dem Elektromotor 36 angetriebenen unteren horizontalen Zahnriemen-Linearantrieb 38 in Bewegung gesetzt. Auf dem unteren horizontalen Zahnriemen-Linearantrieb 38 sitzt der untere Schlitten 42, der auch die Gleitschienen 44 aufweist, auf denen das Lochblech 70 ruht. Mit dem unteren Schlitten 40 bewegen sich somit das Lochblech 70 und der obere Teil des XY-Linearantriebs mit dem oberen horizontalen Zahnriemen-Linearantrieb 34 und dem Elektromotor 32 in Richtung auf die zweite Seitenfläche 20 zu mit. Die Transportfläche 23 der Lochblech-Transporteinrichtung 22 bleibt dabei stationär.

Es ist alternativ auch möglich, die zweite Seitenfläche 20 gegenüber der ersten Seitenfläche 16 anzuordnen. Hierdurch entfällt die Notwendigkeit, in der Horizontalen zwei senkrecht zueinander angeordnete Horizontalantriebe (XY-Linearantrieb) einzusetzen, es reicht ein einzelner Linearantrieb. Allerdings muss dafür am Lochblech 70 umgefasst werden, da ansonsten das Greifelement 25, mit dem das Lochblech 70 aus der Aufnahme 62 des Stikkenwagens 60 herausgezogen wird, für die Abgabe an die Siedebackmaschine im Weg wäre.

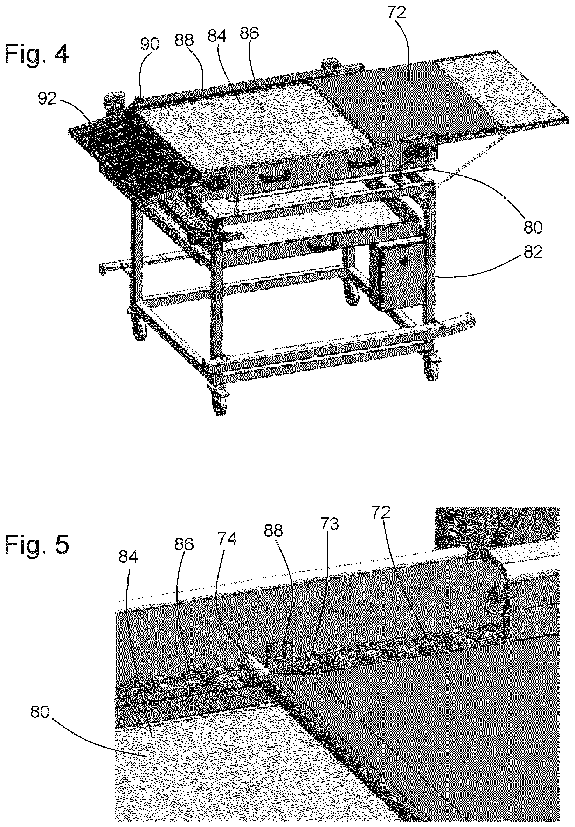

In der Fig. 4 ist ein Beispiel eines Tisches 80 gezeigt, auf den ein Lochblech 70 aufgelegt werden kann. Ein solcher Tisch 80 kann Teil einer Siedebackmaschine sein bzw. direkt vor einem Fettbecken einer Siedebackmaschine aufgestellt werden oder sein.

Der Tisch 80 steht auf einem Gestell 82 und verfügt über eine Auflagefläche 84, auf der, im Bild von rechts kommend, ein Lochblech 70 aufgelegt werden kann, auf dem ein Tuch 72 liegt, auf dem mehrere Reihen von Rohlingen eines Siedegebäcks liegen. Die Lochblech-Transporteinrichtung 22 wird hierzu auf die Höhe der Auflagefläche 84 des Tisches 80 bzw. etwas höher verfahren und das Lochblech 70 mittels des unteren Schlittens 42 durch die zweite Seitenfläche 20 der Vorrichtung 10 auf die Auflagefläche 84 gebracht. Dies erfolgt so weit, dass die Vorderkante des Tuchs 72 in die Nähe eines umlaufenden Kettenantriebs 86 des Tisches 80 kommt. Hier übernimmt der Kettenantrieb 86 die weitere Förderung des Tuchs 82 mit den (nicht dargestellten) Rohlingen.

Dazu ist die Vorderkante des Tuchs 72 mit einer Lasche 73 versehen, durch die eine Stange 74 gesteckt ist, die an beiden Seiten des Tuchs 72 über die Lasche 73 hinausragt. Über eine beidseitig der Auflagefläche 84 vorhandene Kulisse oder einen beidseitig vorhandenen Trichter (nicht dargestellt), kann die Stange 74 im Verlauf des Vorschubs durch den unteren Schlitten 42 der Lochblech-Transporteinrichtung 22 so geführt werden, dass sie von Mitnehmern 88 mitgenommen werden, die in regelmäßigen Abständen beidseitig der Auflagefläche 84 des Tisches 80 am Kettenantrieb 86 angeordnet sind. Die Mitnehmer 88 ergreifen die Stange 74 und ziehen das Tuch 72 mit den Rohlingen von dem Lochblech 70 ab, die ab diesem Zeitpunkt wieder in die Vorrichtung 10 zurückgezogen werden kann und, unter Umkehrung der vorherigen Bewegungen der Lochblech-Transporteinrichtung 22, wieder in die ursprüngliche Aufnahme 62 des Stickenwagens 60 zurück transportiert und abgelegt werden kann. Nachdem das Lochblech 70 abgegeben worden ist, kann die Lochblech-Transporteinrichtung 22 auf die Höhe des nächsten Lochblechs 70 in der nächsten Aufnahme 62 des Stikkenwagens 60 verfahren werden, um den gesamten Vorgang zu wiederholen. Dies wird wiederholt, bis sämtliche Lochbleche 70 abgearbeitet sind.

Auf dem Tisch wird das Tuch 72 von dem Kettenantrieb 86 zu einem Stabgeflechtband 92 gefördert. Das Tuch 72 wird dabei durch einen Spalt zwischen der Kante der Auflagefläche 84 des Tisches und dem Stabgeflechtband 92 nach unten abgezogen. Sobald das gesamte Tuch 72 abgezogen ist, kann es aus einem Schubfach unterhalb des Tisches 80 entnommen und wiederverwendet werden.

Das Stabgeflechtband 92 läuft permanent um und ist leicht zum Fettbecken der Siedebackmaschine (nicht gezeigt) hin geneigt. Sobald eine Reihe von Rohlingen auf einem Tuch 72 an die Kante zum Stabgeflechtband 92 gelangt, werden die Rohlinge soweit weiter transportiert, dass sie vom Stabgeflechtband 92 erfasst und weitertransportiert werden. Am Ende des Stabgeflechtbands 92 fallen die Rohlinge in das im Fettbecken enthaltene heiße Fett und der eigentliche Siedebackvorgang beginnt.

Der Siedebackvorgang ist getaktet, es wird jeweils eine Reihe von Rohlingen zurzeit in das Fettbecken fallen gelassen. Dies bedeutet, dass das Tuch 72 nicht kontinuierlich von dem Kettenantrieb 86 gezogen wird. Um sicherzustellen, dass die Taktung eingehalten wird, ist am Übergang von der Auflagefläche 84 des Tisches 80 zum Stabgeflechtband 92 eine Lichtschranke 90 angeordnet, die über die Breite der Auflagefläche 84 hinweg erkennt, wenn eine Reihe von Rohlingen anwesend ist. Sobald die Lichtschranke 90 blockiert wird, also eine neue Reihe von Rohlingen erkannt wird, wird die Förderung des Tuchs 72 angehalten. Mit dem nächsten Takt wird das Tuch 72 weitergezogen, bis die Rohlinge dieser Reihe vom Stabgeflechtband 92 gegriffen und abtransportiert worden sind und die nächste Reihe von Rohlingen von der Lichtschranke 90 erkannt wird. Da die Transportgeschwindigkeit des Tuchs 72 auf der Auflagefläche 84 größer ist als diejenige der Rohlinge im Fettbecken, können auch größere Abstände zwischen aufeinander folgenden Tüchern 72 mit Rohlingen ausgeglichen und ein kontinuierlicher Siedebackprozess aufrechterhalten werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Vorrichtung
- 12: Rahmengestell
- 14: Rollen
- 16: erste Seitenfläche
- 18: Arretiervorrichtung
- 20: zweite Seitenfläche
- 22: Lochblech-Transporteinrichtung
- 23: Transportfläche
- 24: Greifeinrichtung
- 25: Greifelement
- 26: Steuerung
- 27: Bedienelement
- 28: Elektromotor
- 29: Befestigung mit Innengewinde
- 30: Vertikalschraubstange
- 32: Elektromotor
- 34: oberer horizontaler Zahnriemen-Linearantrieb
- 36: Elektromotor
- 38: unterer horizontaler Zahnriemen-Linearantrieb
- 40: oberer Schlitten
- 42: unterer Schlitten
- 44: Gleitschienen
- 60: Stikkenwagen
- 62: Aufnahmeschienen
- 64: Rollen
- 70: Lochblech
- 72: Tuch
- 73: Lasche
- 74: Stange
- 80: Tisch
- 82: Gestell
- 84: Auflagefläche
- 86: Kettenantrieb
- 88: Mitnehmer
- 90: Lichtschranke
- 92: Stabgeflechtband

## Patentansprüche

1. Vorrichtung (10) zum Beschicken einer Siedebackmaschine, umfassend ein Rahmengestell (12) oder Gehäuse mit einer ersten wenigstens teilweise offenen Seitenfläche (16), an der eine Arretiervorrichtung (18) für einen Stikkenwagen (60) angeordnet ist, und einer zweiten wenigstens teilweise offenen Seitenfläche (20), ferner umfassend eine im Rahmengestell (12) oder Gehäuse angeordnete Lochblech-Transporteinrichtung (22), die eine horizontal und vertikal bewegliche Greifeinrichtung (24) mit einer Steuerung (26) umfasst, wobei die Greifeinrichtung (24) ausgebildet ist, im Rahmengestell (12) oder Gehäuse auf eine vorbestimmte Höhe eines Lochblechs (70) in einer der Lochblechaufnahmen eines Stikkenwagens (60) verfahren zu werden, ein in der Lochblechaufnahme enthaltenes Lochblech (70) zu ergreifen und durch die erste Seitenfläche (16) in das Rahmengestell (12) oder Gehäuse zu ziehen, innerhalb des Rahmengestells (12) oder Gehäuses auf eine Abgabehöhe zu verfahren und durch die zweite Seitenfläche (20) in eine externe Abgabeposition für eine Siedebackmaschine zu verschieben.

2. Vorrichtung (10) nach Anspruch 1, **dadurch gekennzeichnet, dass** die Lochblech-Transporteinrichtung (22) ausgebildet ist, das Lochblech (70) aus der externen Abgabeposition in das Rahmengestell (12) oder Gehäuse zurück zu ziehen, auf die Höhe einer Lochblechaufnahme des Stikkenwagens (60) zu bringen und in die Lochblechaufnahme einzuschieben und loszulassen.

3. Vorrichtung (10) nach Anspruch 1 oder 2, **dadurch gekennzeichnet, dass** die Steuerung (26) mit einem Bedienelement (27) verbunden oder ein Bedienelement (27) umfasst, mit dem ein Entnahmevorgang aus einem Stikkenwagen (60) und/oder ein Rückholvorgang von der Siedebackmaschine manuell gestartet werden kann, und/oder, dass die Steuerung (26) ausgebildet ist, den Start des Entnahmevorgangs und/oder das Verweilen des Lochblechs (70) in der Aufnahme der Siedebackmaschine zeitlich gesteuert mit festgelegten zeitlichen Intervallen auszuführen.

4. Vorrichtung (10) nach einem der Ansprüche 1 bis 3, **dadurch gekennzeichnet, dass** die Steuerung (26) ausgebildet ist, den Start des Abarbeitens der Lochbleche (70) eines Stikkenwagens (60) nach manueller Betätigung eines Bedienelements (27) zu veranlassen und/oder, den Start des Abarbeitens der Lochbleche (70) eines Stikkenwagens (60) automatisch nach dem Arretieren eines Stikkenwagens (60) mit der Arretiervorrichtung (18) zu veranlassen, wobei die Arretiervorrichtung (18) einen Sensor umfasst, der mit der Steuerung (26) signalverbunden ist und ein Signal abgibt, wenn eine Arretierung eines Stikkenwagens (60) erfolgt ist.

5. Vorrichtung (10) nach einem der Ansprüche 1 bis 4, **dadurch gekennzeichnet, dass** die Steuerung (26) eine Schnittstelle zu einer Siedebackmaschine umfasst, die mit einer Steuereinrichtung der Siedebackmaschine verbunden oder verbindbar ist oder die die Steuerung der Lochblech-Transporteinrichtung (22) ausführt, wobei die Steuerung (26) ausgebildet ist, auf ein Signal der Siedebackmaschine hin, welche die Vollendung des Abziehens des Tuchs (72) mit den Rohlingen vom Lochblech (70) oder das Ergreifen des Tuchs (70) mit den Rohlingen anzeigt, das Zurückholen des Lochblechs (70) zu starten.

6. Vorrichtung (10) nach einem der Ansprüche 1 bis 5, **dadurch gekennzeichnet, dass** die Lochblech-Transporteinrichtung (22) über eine XYZ-Linearführung, insbesondere mit Linearmotoren (28, 32, 36), verfügt, die von einer Motorsteuerung angesteuert werden, die von der Steuerung (26) zum Anfahren der gewünschten Positionen instruiert wird.

7. Vorrichtung (10) nach einem der Ansprüche 1 bis 6, **dadurch gekennzeichnet, dass** die Greifeinrichtung (24) über ein oder mehrere Greifelemente (25) verfügt, das oder die ausgebildet ist oder sind, standardisierte Lochbleche (70) zu ergreifen und zu halten.

8. Vorrichtung (10) nach einem der Ansprüche 1 bis 7, **dadurch gekennzeichnet, dass** die Lochblech-Transporteinrichtung (22) über Stützelemente (44) verfügt, auf welchen ein Lochblech (70) während des Verfahrens im Rahmengestell (12) bzw. Gehäuse der Vorrichtung (12) abgelegt ist oder wird.

9. Vorrichtung (10) nach einem der Ansprüche 1 bis 8, **dadurch gekennzeichnet, dass** die Steuerung (26) ausgebildet ist, die Greifeinrichtung (24) nach dem Erfassen eines Lochblechs (70) in einer Aufnahme eines Stikkenwagens (60) etwas anzuheben, bevor das Lochblech (70) aus der Aufnahme herausgezogen wird.

10. Verfahren zum Beschicken einer Siedebackmaschine, bei dem ein Stikkenwagen (60) mit Rohlingen auf Tüchern (72) belegten Lochblechen in den Aufnahmen des Stikkenwagens (60) an eine erste Seitenfläche (16) einer Vorrichtung (10) nach einem der Ansprüche 1 bis 9 herangefahren wird, an der ersten Seitenfläche (20) arretiert wird und eine Greifeinrichtung (24) an einer Lochblech-Transporteinrichtung (22) der Vorrichtung (10) auf die Höhe eines Lochblechs (70) in einer der Aufnahmen des Stikkenwagens (60) gefahren wird, ein Greifelement (25) der Greifeinrichtung (24) zu dem Lochblech (70) gefahren wird, das Lochblech (70) ergreift und auf die Lochblech-Transporteinrichtung (22) zieht, wobei die Lochblech-Transporteinrichtung (22) das Lochblech (70) anschließend auf eine Höhe einer Abgabeposition zu einer Siedebackmaschine verfährt und durch eine zweite Seitenfläche (20) der Vorrichtung (10) in eine Abgabeposition der Siedebackmaschine herausfährt.

11. Verfahren nach Anspruch 10, **dadurch gekennzeichnet, dass** die Greifeinrichtung (24) das Lochblech (70) wieder aus der Siedebackmaschine herauszieht und auf die Höhe der oder einer Aufnahme des Stikkenwagens (60) verfährt und das Lochblech (70) in die Aufnahme des Stikkenwagens (60) einschiebt.

12. Verfahren nach Anspruch 10 und 11, **dadurch gekennzeichnet, dass** der Vorgang wiederholt wird, bis sämtliche Lochbleche (70) im Stikkenwagen (60) verarbeitet worden sind.

13. Siedebacksystem, umfassend eine Siedebackmaschine und eine Vorrichtung (10) nach einem der Ansprüche 1 bis 9, die mit ihrer zweiten Seitenfläche (20) an einer Aufnahmeseite der Siedebackmaschine angeordnet ist und ausgebildet ist, Lochbleche (70) mit Rohlingen von Aufnahmen von an der ersten Seitenfläche (16) arretierten Stikkenwagen (60) in eine Abgabeposition an der Siedebackmaschine abzulegen und die geleerten Lochbleche (70) wieder von der Abgabeposition der Siedebackmaschine abzuziehen und in die Aufnahmen der Stikkenwagen (60) zurückzutransportieren.

14. Siedebacksystem nach Anspruch 13, **dadurch gekennzeichnet, dass** die Vorrichtung (10) separat von der Siedebackmaschine oder ein Teil der Siedebackmaschine ist.

15. Siedebacksystem nach Anspruch 13 oder 14, **dadurch gekennzeichnet, dass** die Steuerung (26) der Vorrichtung eine eigene Steuerung ist, die entweder keine Verbindung mit einer Steuerung der Siedebackmaschine hat oder über eine Schnittstelle mit einer Steuerung der Siedebackmaschine verbunden ist, um Signale auszutauschen, oder dass die Steuerung (26) der Vorrichtung (10) in einer Steuerung der Siedebackmaschine implementiert ist.
